(19) Europäisches Patentamt

European Patent Office

Office européen des brevets

(11) **EP 1 423 731 B1**

(12) **EUROPÄISCHE PATENTSCHRIFT**

(45) Veröffentlichungstag und Bekanntmachung des Hinweises auf die Patenterteilung:
**04.10.2006 Patentblatt 2006/40**

(21) Anmeldenummer: **02754481.6**

(22) Anmeldetag: **01.08.2002**

(51) Int Cl.:
***G01S 17/89*** *(2006.01)* ***G01S 7/487*** *(2006.01)*

(86) Internationale Anmeldenummer:
**PCT/DE2002/002843**

(87) Internationale Veröffentlichungsnummer:
**WO 2003/016944 (27.02.2003 Gazette 2003/09)**

(54) **VERFAHREN UND VORRICHTUNG ZUR AUFNAHME EINES DREIDIMENSIONALEN ABSTANDSBILDES**

METHOD AND DEVICE FOR RECORDING A THREE-DIMENSIONAL DISTANCE-MEASURING IMAGE

PROCEDE ET DISPOSITIF POUR ACQUERIR UNE IMAGE TELEMETRIQUE TRIDIMENSIONNELLE

(84) Benannte Vertragsstaaten:
**DE FR GB IT**

(30) Priorität: **06.08.2001 DE 10138531**
**31.10.2001 DE 10153742**

(43) Veröffentlichungstag der Anmeldung:
**02.06.2004 Patentblatt 2004/23**

(73) Patentinhaber: **SIEMENS AKTIENGESELLSCHAFT**
**80333 München (DE)**

(72) Erfinder:
• **MENGEL, Peter**
**82223 Eichenau (DE)**

• **DOEMENS, Günter**
**83607 Holzkirchen (DE)**

(56) Entgegenhaltungen:
**DE-A- 4 305 011 DE-A- 19 833 207**

• **JEREMIAS R ET AL: "A CMOS PHOTOSENSOR ARRAY FOR 3D IMAGING USING PULSED LASER" IEEE INTERNATIONAL SOLID STATE CIRCUITS CONFERENCE, IEEE INC. NEW YORK, US, Nr. 16, 2001, Seiten 252-253,452-453, XP001069075 ISSN: 0193-6530**

EP 1 423 731 B1

## Beschreibung

Die schnelle, robuste Erfassung dreidimensionaler Bilder gewinnt insbesondere für die Sensorik auf zahlreichen Gebieten zunehmend an Bedeutung. Bekannte Triangulationsverfahren sind wegen der erforderlichen Messbasis für die trigonometrische Berechnung eines Abstandswertes nur für den Nahbereich bis ca. 2m geeignet und eingeschränkt anwendbar. Insbesondere für größere Messbereiche von beispielsweise 20 cm bis 50 m ergeben sich für kostengünstige dreidimensional (3D) erfassende und auswertende Messsysteme vielfältigste Anwendungen, wie beispielsweise im Bereich der Automobiltechnik, der Navigation oder der Gebäude-, Sicherheits- und Automatisierungstechnik. Die Vermessung größerer 3D - Szenen und 3D - Objekte kann heute nur statisch mittels Photogrammetrie oder mit einem scannenden 3D - Laserradar bei entsprechend hohem Kosten- und Zeitaufwand erfolgen.

In der deutschen Patentanmeldung Nr. 198 33 207 wird ein Verfahren beschrieben, bei dem die extrem kurze Integrationszeit eines CMOS - Fotosensors, die beispielsweise bei 30 ns liegt, in Verbindung mit einem ebenfalls kurzen Laserimpuls genutzt wird, um Entfernungs- bzw. Abstandsbilder schnell und kostengünstig durch Auswertung von Lichtlaufzeitmessungen zu erzeugen. Zugleich mit dem Aussenden des Laserimpulses wird über einen Trigger ein Messfenster am CMOS Bildwandler geöffnet und die Lichtintensität des Laserimpulses nach Reflexion am auszumessenden Objekt in zwei aufeinanderfolgenden Messungen mit den Integrationszeiten $T_1$ und $T_2$ detektiert. Aus der Messung der integrierten Intensität $U_1$ und $U_2$ innerhalb von zwei Messfenstern mit Integrationszeiten $T_1$ und $T_2$ lässt sich die Laufzeit $T_0$ und damit der Abstand zum Objektpunkt exakt berechnen, nach der Rechenbeziehung:

$$d = \frac{1}{2} c \frac{U_2 T_1 - U_1 T_2}{U_2 - U_1}$$

Als Beleuchtung dient eine Laserlichtquelle, die mit dem Beginn der Integrationszeit $T_1$ und $T_2$ synchronisiert ist und kurze Anstiegszeiten (ca. 1 ns), sowie eine möglichst konstante Ausgangsleistung aufweist. Die Anwendung dieser Formel erfordert allerdings aufgrund der Differenz und Quotientenbildung eine Messung mit Lichtintensitäten, deren integrierte Photospannungen deutlich über der Rauschgrenze des CMOS - Bildwandlers liegen müssen. Zwar können die Ergebnisse zahlreicher Laserimpulsbeleuchtungen aufsummiert werden, eine Verbesserung des Signal/Rauschverhältnisses lässt sich aber nur mit der Wurzel der Anzahl der Laserimpulse erreichen. Des weiteren führen endliche Anstiegsflanken der Laserimpulse sowie unvermeidbare Nichtlinearitäten im Integrationsverhalten des CMOS-Bildwandlers zu Messwertfehlern, die zusätzliche Kalibrierverfahren erfordern.

Der Erfindung liegt die Aufgabe zugrunde Verfahren und Vorrichtung zur Aufnahme eines dreidimensionalen Abstandsbildes mittels Lichtlaufzeitmessungen zur Verfügung zu stellen, womit ein vergrößerter Abstandsmessbereich erzielt wird, Unabhängigkeit des Sensorsignals von der Form der Lichtimpulse gegeben ist und eine niedrigere Lichtleistung für die Sendeseite ermöglicht wird.

Die Lösung geschieht durch die jeweilige Merkmalskombination von Anspruch 1, 3 bzw. Anspruch 14 oder 15. Vorteilhafte Ausgestaltungen können den Unteransprüchen entnommen werden.

Die vorliegende Erfindung verwendet einen CMOS - Fotosensor mit einer Vielzahl von Bildpunkten bzw. -zellen mit Kurzzeitintegration, wobei die Integrationszeit bildpunktweise einstellbar ist, sowie eine Lichtimpulsbeleuchtung zur Erzeugung eines 3D - Abstandbildes. Die dazu verwendete Lichtquelle muss einheitlich ansteuerbar sein, kann aber sowohl punktförmig, als auch flächig ausgebildet sein. Für die Bestimmung der Abstandswerte wird ein neues Messprinzip eingesetzt mit dem Ziel, zuverlässige Lichtlaufzeitmessungen bis an die Rauschgrenze des CMOS Sensors zu ermöglichen. Dazu wird durch die Triggersignale sendeseitig das Aussenden der Lichtimpulse und empfangsseitig das Öffnen des elektronischen Shutters, gleichbedeutend mit dem Öffnen eines Zeitfensters, am CMOS Sensor gesteuert. Dies geschieht empfangsseitig mit einer schrittweise ansteigenden Zeitverzögerung, beispielsweise über eine Verzögerungsleitung, in Inkrementen von beispielsweise 1/10 Nanosekunde. Somit werden ausgesendeter Laserimpuls und Integrationsfenster zeitlich mit wachsender Zeitverzögerung gegeneinander verschoben, wobei mit je schrittweise ansteigender Triggerverzögerung mindestens ein Lichtimpuls gesendet wird. Zur Verringerung der Laserimpulsleistung werden bei möglichst allen Triggerverzögerungen Mehrfachbelichtungen angewandt und eine Signalauswertung zum Abschluss ausgeführt. Die so gemessenen integrierten Sensorsignale werden in einer Verarbeitungseinheit gespeichert.

Bei Korrelation der eingestellten Verzögerung mit der Lichtlaufzeit des korrespondierenden Objektpunktes ergibt sich entsprechend einer Lösung ein Maximum im integrierten Signal, dessen Ermittlung aus den gespeicherten Werten der Verarbeitungseinheit durch Interpolationsverfahren mit hoher Sensitivität und präzise durchgeführt werden kann. Der 3D-Abstandwert kann somit anhand der für die größte Übereinstimmung zwischen Zeitfenster und zurückreflektiertem Lichtimpuls ermittelte Triggerverzögerung definiert werden und das Ergebnis, die Lichtlaufzeit, wird weitgehend unabhängig von der Form des Lichtimpulses sowie von den Linearitätseigenschaften des CMOS Bildwandlers erhalten. Anders ausgedrückt ergibt sich der Abstand zum Objektpunkt aus der Zahl von Verzögerungsschritten, die bis zu diesem Zustand aktiviert wurden. Hierbei sind Laserimpuls und Integrationszeit etwa von gleicher Dauer um ein möglichst ausgeprägtes Korrelationsmaximum zu erzielen. Die Integrationszeit ist jedoch aus schaltungstechnischen Gründen auf etwa 30 ns begrenzt.

Eine weitere Lösung der gestellten Aufgabe benutzt ebenfalls die Kurzzeitintegration eines Photoempfängers, sowie die in Schritten durchgeführte zeitliche Verzögerung eines Laserimpulses relativ zu empfangsseitigen Integrationsfenstern. Die Kurzzeitintegration wird jedoch zweimal mit gleicher Integrationszeit, d.h. mit gleichlangem Integrationsfenster, entweder parallel oder seriell durchgeführt. Dies geschieht in Bezug auf zwei hintereinander geschaltete und unmittelbar aufeinander folgende Integrationsfenster. Dabei bedeutet die parallele Verfahrensweise, dass gleichzeitig für das vordere und für das hintere Integrationsfenster beleuchtet und detektiert wird. Die über beispielsweise eine Verzögerung zeitverzögerte Triggerung der Integrationsfenster relativ zum sendeseitigen Laserimpuls wird unverändert ausgeführt. Die serielle Behandlung sieht eine Auswertung mit oder durch das erste Integrationsfenster vor, woraufhin die zweite sich anschließende Phase in Bezug auf das zweite Integrationsfenster ausgewertet wird und die jeweils abgespeicherten integrierten Werte miteinander verglichen werden. Für diesen Fall der Auswertung ist die Dauer des Laserimpulses kurz im Verhältnis zur Dauer der Integrationszeit bzw. der Länge des Integrationsfensters. Ein Laserimpuls kann beispielsweise 4 ns betragen, wo hingegen die Integrationszeit z.B. 30 ns dauert. Durch diese Auswertemethode wird der Objektpunktabstand ebenfalls durch die ermittelte Richtlaufzeit bestimmt. Diese ergibt sich durch die Suche nach einem möglichst eindeutig auswertbarem empfangsseitigem Ereignis, das einer bestimmten Triggerverzögerung, die schrittweise veränderbar ist, zugeordnet werden kann. In der ersten Variante wurde ein Maximum für die empfangsseitige Deckungsgleichheit von Laserimpuls und Integrationsfenster gesucht. Bei der hier beschriebenen Auswertemethode wird der Zeitpunkt detektiert, bei dem sich der Lichtimpuls am Übergang vom ersten zum zweiten Integrationsfenster befindet. Für diesen Fall, wenn der zurückreflektierte Lichtimpuls am Empfänger symmetrisch zur Hälfte in das erste und zur weiteren Hälfte in das zweite Integrationsfenster fällt, ergeben sich gleiche Lichtanteile bzw. gleiche Spannungen. Auswertbar ist ebenso die Differenz dieser beiden Spannungswerte, die gegen null geht. Da dieser Nulldurchgang sehr steil ist, ist eine Ermittlung relativ einfach.

Um kritische Laserleistungen aufgrund von Laserschutzbestimmungen keinesfalls zu überschreiten, können Mehrfachbelichtungen eingesetzt werden. Ein wesentlicher damit erzielbarer Vorteil liegt jedoch in der Kummulierung von mehreren hintereinander eintreffenden Lichtimpulsen an den Integrationszellen. Diese werden durch entsprechendes Öffnen und Schließen der Integrationszellen bei jedem Lichtimpuls aufintegriert, so dass an jeder Integrationszelle ein ausreichend hoher Signalpegel vorliegt, der sich wesentlich vom Rauschbereich abhängt. Somit kann für die Vielzahl von Integrationszellen, deren örtliche Verteilung der Pixelverteilung des Bildes entspricht, eine insgesamt gut auswertbare Anzahl von Spannungssignalen erzielt werden. Nachdem das zeitaufwendige Auslesen der Vielzahl von Integrationszellen erst am Ende einer Mehrfachbelichtung geschieht, läuft die Auswertung relativ schnell ab.

Ein weiterer wesentlicher Vorteil liegt in der kolinearen Führung der Lichtstrahlen auf einer Achse.

Im Folgenden werden anhand von die Erfindung nicht einschränkenden Figuren Ausführungsbeispiele beschrieben:

Figur 1        zeigt eine Messvorrichtung zur Erzeugung von dreidimensionalen Abstandsbildern,

Figur 2        zeigt das Verfahrensprinzip der korrelierten Lichtlaufzeitmessung und

Figur 3        zeigt die Interpolation zur Ermittlung des Maximalwertes zur Bestimmung der Laufzeitverzögerung $T_0$.

Figuren 4 bis 7    zeigen arstellungen zur Erzeugung von Abstandsbildern mit differenzieller Kurzzeitintegration an CMOS-Sensoren

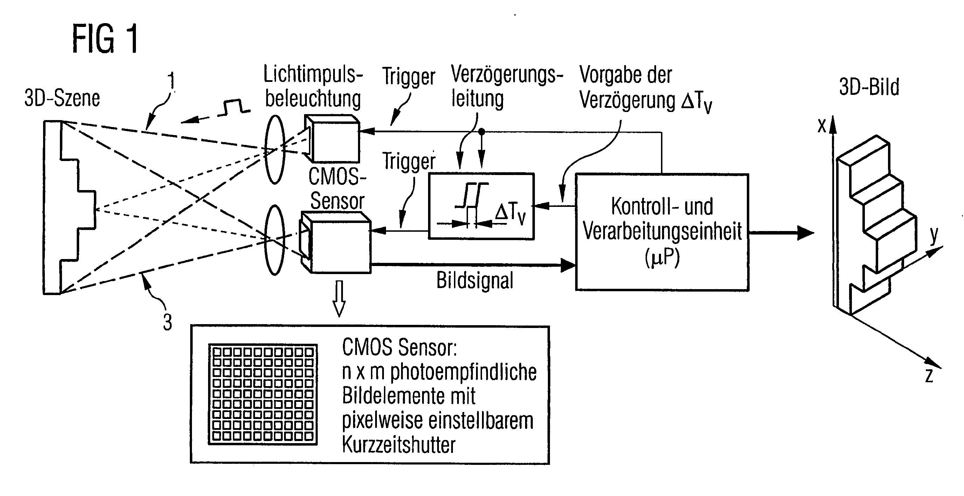

- Die gesamte zu vermessende 3D - Szene wird für eine Bildaufnahme seriell mit kurzen Lichtimpulsen mit Anstiegszeiten in Nanosekunden-Bereich beleuchtet. Der Start des Aussendens der Lichtimpulse erfolgt über einen Trigger , der für jeden Messvorgang von einer Kontroll- und Verarbeitungseinheit vorgegeben wird (Figur 1). Ein Teil des Triggersignals wird gleichzeitig über eine programmierbare Verzögerungsleitung geführt und dient nach einer vorgegebenen zeitlichen Verzögerung $T_V$ mit Inkrementen im 1/10 - Nanosekundenbereich als Startsignal für das Öffnen des elektronischen Shutters am CMOS Fotosensor , das nach einer bestimmten kurzen Integrationszeit (beispielsweise 30 ns) wieder geschlossen wird. Dies ist gleichbedeutend mit dem Öffnen eines Zeitfensters zum Empfang von zurückreflektierten Lichtimpulsen 3. In einem geöffneten Zeitfenster können eingehende Lichtimpulse aufintegriert werden. Die Integrationszeit, also die Dauer des geöffneten Fensters, wird vorteilhafterweise gleich der zeitlichen Dauer eines Lichtimpulses gewählt.

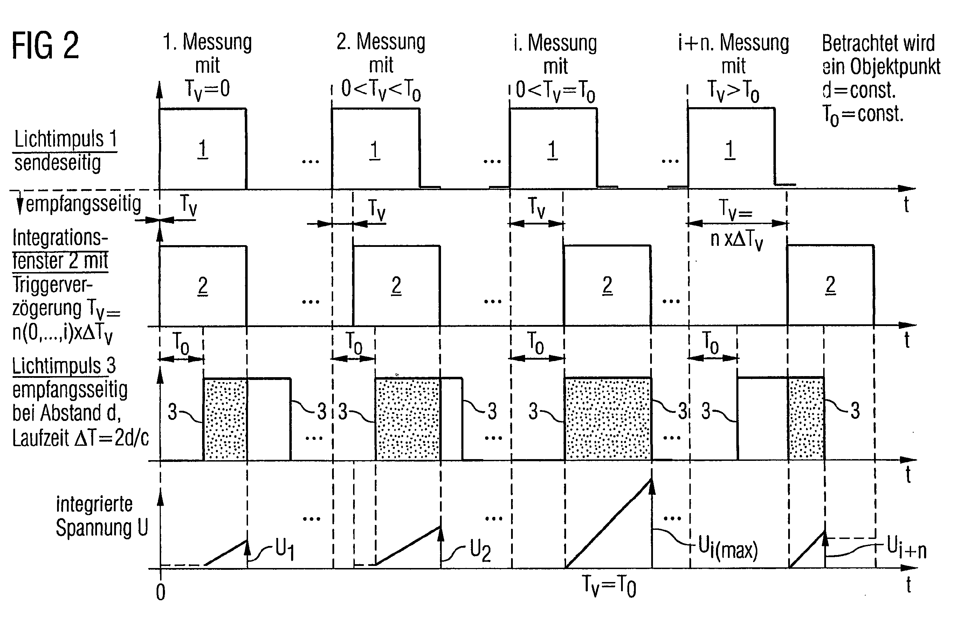

- Die ausgesandten Lichtimpulse werden an den Objekten der 3D Szenen gestreut und das zurückkommende Licht über eine entsprechende Optik am CMOS Sensor innerhalb der Integrationszeit des elektronischen Shutters erfasst. Aufgrund der unterschiedlichen Abstände unterschiedlicher Objektpunkte vom Sensor werden mit den Orten korrespondierende Lichtimpulse eine unterschiedliche Laufzeitverzögerung $T_0$ erhalten. Für einen bestimmten, einzigen Objektpunkt im Abstand d ergibt sich damit ein integriertes Sensorsignal $U (T_0, T_V)$ am korrespondierenden, empfangsseitigen Bildpunkt aus der zeitlichen Überlappung des CMOS Integrationsfensters 2 mit dem zurückkommenden Lichtimpuls 3 (mathematische Faltungsfunktion) bei der momentan eingestellten Triggerverzögerung $T_V$ (Figur 2).

- Wird nun die Triggerverzögerung $T_V$ beginnend vom Wert 0 in Inkrementen n x $\Delta T_V$ (=$T_V$) erhöht, so steigt das Sensorsignal $U (T_0, T_V)$ zunächst an bis die Triggerverzögerung $T_V$ gleich der Lichtlaufzeit $T_0$ für diesen Bildpunkt ist. In diesem Fall liegt eine maximale Überlappung von zurückkommendem Laserimpuls 3 und dem Messfenster 2 des CMOS-Sensors vor, so dass sich hier ein Maximum für die integrierte Intensität ergibt. Wird die Triggerverzögerung $T_V$ darüber hinaus weiter erhöht so reduziert sich wieder der zeitliche Überlappungsbereich und damit das integrierte Sensorsignal (Spannung U).

- Damit lässt sich ein 3D - Abstandsbild aus einfachen Intensitätsvergleichsmessungen mit Extremwertbestimmung unter Einsatz sehr niederer Lichtleistungen erzeugen. Die Kontroll- und Verarbeitungseinheit speichert für eine Reihe von unterschiedlichen Triggerverzögerungen n x $\Delta T_V$ (Laufindex n = 0 bis i) die zugehörigen Sensorsignale $U (T_0, T_V)$ des gesamten CMOS Fotosensors ab und ermittelt anschließend den Maximalwert $U (T_0, T_V)_{Max}$ für jeden einzelnen Bildpunkt . Aus der zugehörigen Triggerverzögerung $T_V$ lässt sich die Lichtlaufzeit $T_0$= i x $\Delta T_V$ , siehe Fig. 2, für diesen Bildpunkt bestimmen und daraus der Abstand d des korrespondierenden Objektpunktes d = c $T_0$ /2 (c - Lichtgeschwindigkeit).

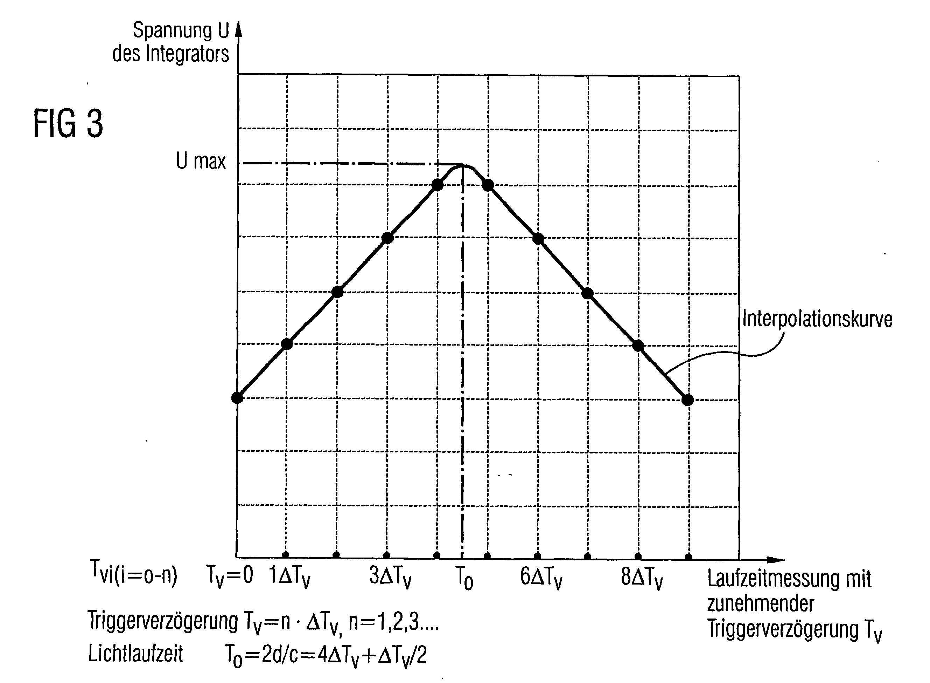

- Im allgemeinen wird die Lichtlaufzeit $T_0$ nicht exakt gleich der in Inkrementen eingestellten Triggerverzögerung n x $\Delta T_V$ sein, sondern einen Zwischenwert besitzen, wie in Fig. 3 gezeigt. Es ist daher vorgesehen, für die Maximalwertbestimmung Interpolationsverfahren einzusetzen. Für ideale Pulsformen sind lineare Verfahren hinreichend. Unter realen Bedingungen ist es aber vorteilhaft, aufwendige Interpolationsverfahren auf der Basis quadratischer Polynome oder Splin-Funktionen einzusetzen. Das Ergebnis für die Lichtlaufzeit $T_0$ lässt sich dabei nicht nur aus dem Maximalwert sondern gegebenenfalls auch aus anderen Formkriterien, Schnittpunkten, etc... der Interpolationskurve ermitteln. Da bei der Messung von Lichtimpulsen 3 mit unterschiedlichen Laufzeiten $T_0$ die Interpolationskurven der Signalwerte nur in ihrer Lage bezüglich der eingestellten Triggerverzögerungen $T_V$ verschoben werden, ist auch ein Auswertung durch Vergleich mit einer gespeicherten Referenzkurve durchführbar, die zuvor bei einem bekannten Abstandswert d aufgenommen wurde. Damit lässt sich mit Interpolations- und Referenz-Vergleichsverfahren das Ergebnis der Abstandsbestimmung in seiner Genauigkeit verbessern und die Anzahl der einzustellenden Triggerverzögerungen für eine gewünschte Entfernungsäuflösung reduzieren.

- Für eine elektronische Triggerverzögerung können vorteilhaft programmierbare Verzögerungsleitungen (Programmable Delay Lines) in CMOS Technologie eingesetzt werden. Erhältlich sind beispielsweise Verzögerungselemente mit standardmäßig 0,25 ns Inkrement und 256 programmierbaren Einstellungen. In künftigen Entwicklungen sind Inkremente mit 0,1 ns denkbar. Damit werden Entfernungsauflösungen von 1,5 cm möglich, die durch Interpolation noch auf 0,5 cm verbessert werden können.

- Die in Figur 1 dargestellte Kontroll- und Verarbeitungseinheit kann teilweise- oder vollständig innerhalb der elektronischen Ansteuerungseinheiten des CMOS Sensor integriert werden.

- Entfernungsbilder mit etwa tausend Bildpunkten sind für eine Raum- und Sicherheitsüberwachung in den meisten Fällen schon ausreichend. Möchte man für einen Entfernungs- Messbereich von 10 m Entfernungsbilder mit 0,5 % Auflösung (5 cm) erzeugen , so werden mit Interpolation etwa 100 Bildaufnahmen mit Verzögerungsinkrementen von $\Delta T_V$ = 0,6 ns erforderlich. Dies führt unter Annahme einer Bildpunktdatenrate des CMOS Sensors von 5 MHz zu einer Messzeit von 1000 x 0,2 $\mu$s x 100 = 20 ms für die Erfassung des gesamten 3D Abstandsbildes ( $\cong$ 50 3D-Bilder/s).

- Bei der Messung mit einer momentan eingestellten Triggerverzögerung $T_V$ können zusätzlich noch mehrere Lichtimpulse analog am Chip aufaddiert werden, wodurch eine weitere Verbesserung des Signal/ Rauschverhältnisses erzielt wird und eine adaptive Einstellung der Mehrfachbelichtung entsprechend Objektreflektivität ausgeführt werden kann.

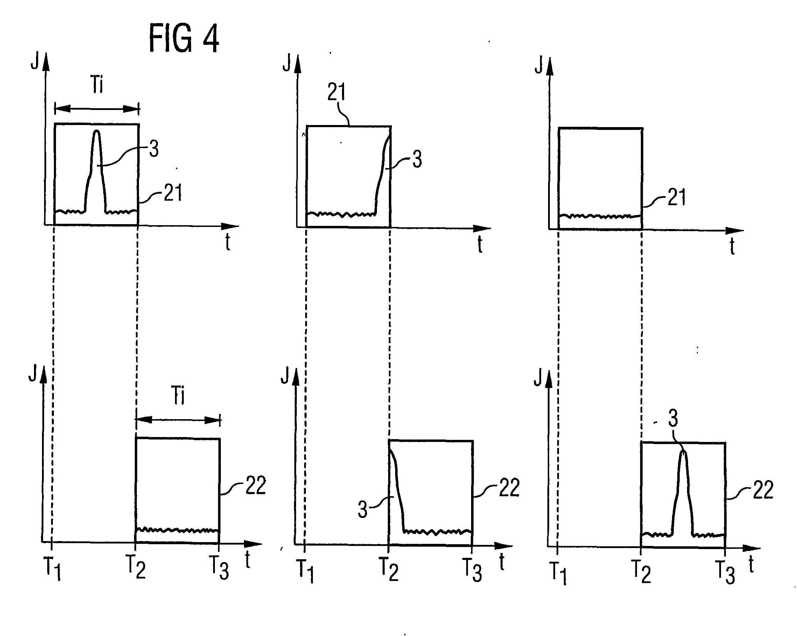

Das anhand der Figuren 4 bis 7 näher erläuterte Verfahren der differentiellen Kurzzeitintegration an CMOS-Sensoren beinhaltet folgendes:
Das vorgeschlagene Verfahren benutzt ebenfalls die Kurzzeitintegration eines Photoempfängers, sowie die in Schritten durchgeführte zeitliche Verzögerung eines Laserimpulses relativ zu einem oder mehreren Integrationsfenstern. Im Unterschied zur ersten Lösung der gestellten Aufgabe wird die Kurzzeitintegration jedoch zweimal parallel oder seriell mit gleicher Integrationszeit $T_i$ durchgeführt, wobei die beiden gleichlangen Integrationsfenster 21, 22 unmittelbar hintereinander geschaltet sind und somit eine gemeinsame zeitliche Grenze aufweisen.

Die Dauer des Laserimpulses ist vorzugsweise kurz im Vergleich zur Integrationszeit $T_i$. Der Messvorgang für die Lichtlaufzeit besteht nun darin, dass der ausgesendete Laserimpuls relativ zu der Integrationszeit $T_i$ um die Verzögerungszeitinkremente $\Delta T_V$ verschoben wird. An der optoelektronischen Umsetzung ändert sich der integrale Wert der Spannung U bei fortschreitender Triggerverzögerung $T_V$ so lange nicht, wie der Laserimpuls voll in eines der beiden Integrationsfenster 21, 22 fällt. Figur 4 zeigt diesen Zustand, wobei der Laserimpuls in der linken Bildhälfte im ersten Integrationsfenster 21 befindlich ist und in der rechten Bildhälfte im zweiten Integrationsfenster 22 auftaucht. In der mittleren Darstellung der Figur 4 befindet sich der Laserimpuls 3 zur Hälfte im ersten und zur Hälfte im zweiten Integrationsfenster. Kurz vor diesem Übergang nimmt der integrale Wert der Spannung U der empfangene Lichtintensität durch das zeitliche Herauswandern aus dem jeweiligen Integrationsfenster entsprechend ab, während in dem sich unmittelbar anschließenden Integrationsfenster die integrierte Lichtintensität entsprechend zunimmt. Bei einer bestimmten der jeweiligen Entfernung d zum Objektort entsprechenden Triggerverzögerung sind somit die in den beiden Integrationsfenstern gemessenen Spannungen gleich groß. Ihre Differenz geht gegen null. Dieser Nulldurchgang ist sehr steil und damit genau bestimmbar. Weiterhin können einfache Interpolationsverfahren eine wesentliche Präzisierung erzielen.

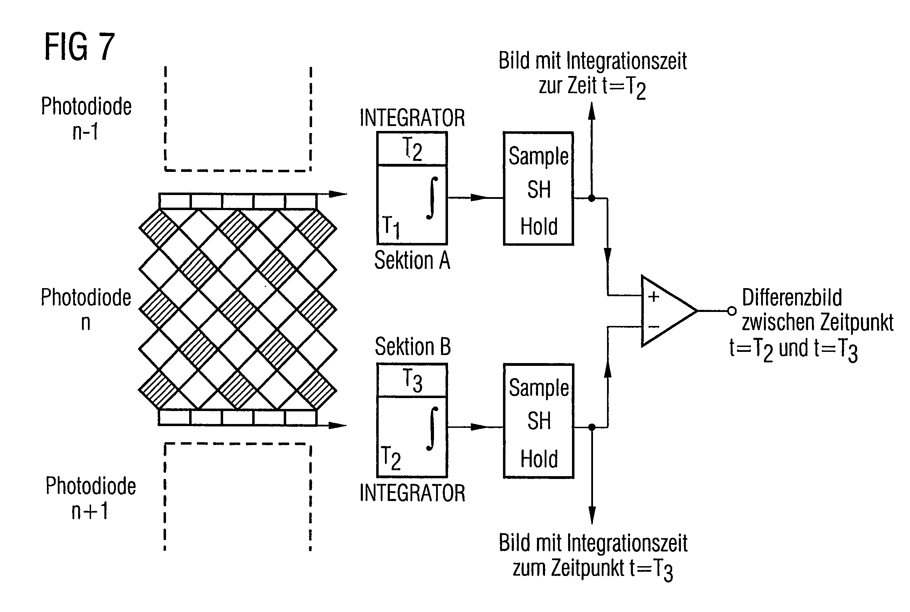

Figur 7 betrifft eine grafische Darstellung zur Auswertung einer Signalkurze bei differentieller Kurzzeitintegration an CMOS-Sensor. Die im Spannungs/Zeit-Diagramm dargestellte Funktion wird durch Aneinanderreihung von Messpunkten aufgebaut, wobei sich ein einzelner Messpunkt aus einer Messung mit konstanter Triggerverzögerung $T_V$ ergibt. Diese Triggerverzögerung setzt sich zusammen aus einem Anfangs- oder Nullwert addiert mit dem Verzögerungszeitinkrement $\Delta T_V$ oder einem Vielfachen davon. Für jeden stufenweise konstant gehaltenen Wert der Triggerverzögerung ergibt sich ein Messpunkt. Innerhalb einer Aufnahme eines Messpunktes kann beispielsweise die beschriebene Mehrfachbeschichtung stattfinden, so dass die Integration erst zum Schluss dieser Mehrfachbelichtung erfolgt .

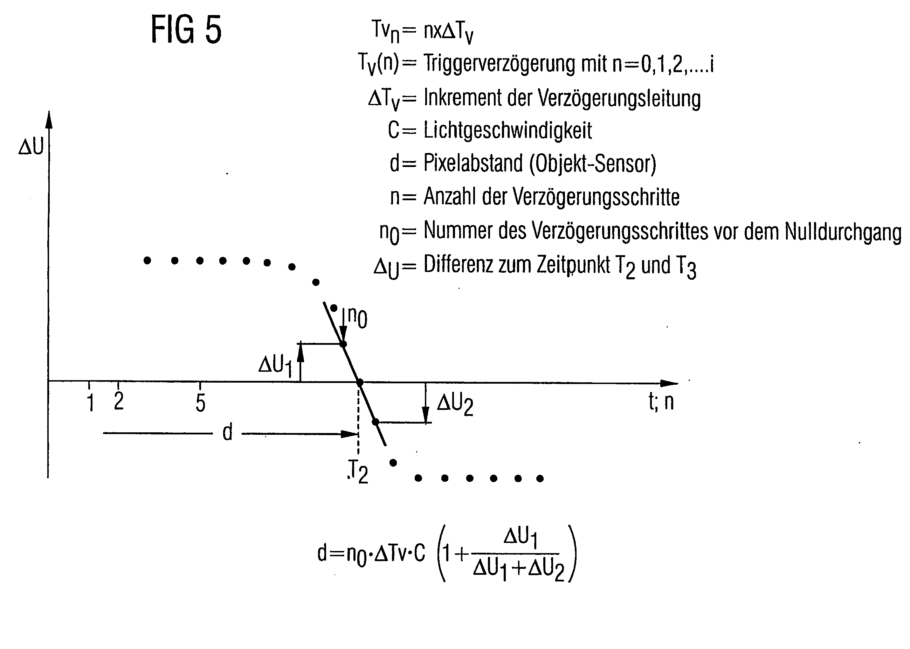

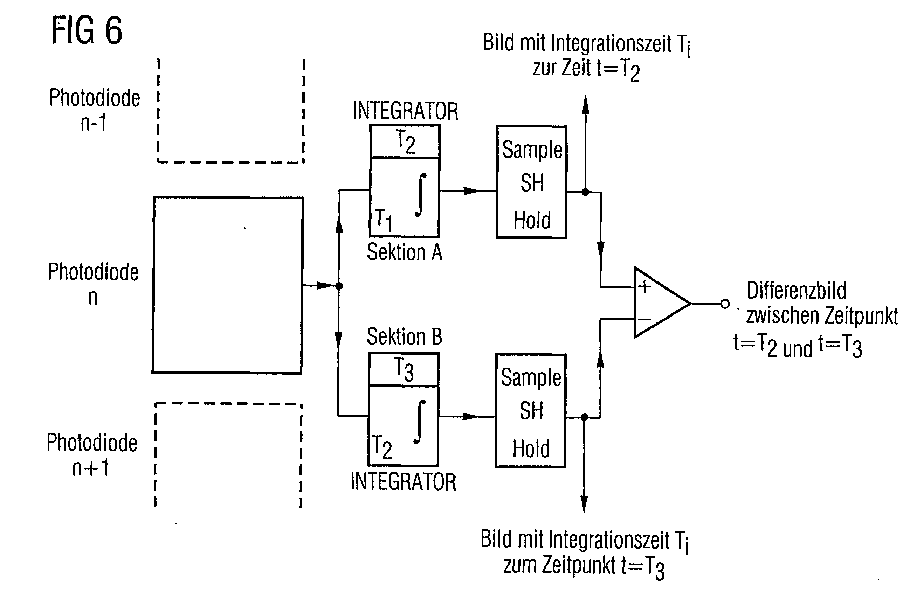

In Figur 5 ist weiterhin erkennbar, dass ein Spannungswert aus einem der beiden verwendeten unmittelbar aufeinander folgenden Integrationsfenster negativ gesetzt wird, so dass die Funktion einen Nulldurchgang aufweist. Mit dem Bezugszeichen $n_0$ wird die Nummer des Verzögerungsschrittes vor dem Nulldurchgang bezeichnet. In der in Figur 5 angeführten Gleichung für den Pixelabstand d, der Abstand zwischen Objekt und Sensor, ist der Wert $n_0$ enthalten. Der Nulldurchgang der in Figur 5 dargestellten Funktion wird also in der Regel über ein Interpolationsverfahren ermittelt. Bei gleichzeitiger Betrachtung der Figuren 4 bis 7 werden die zeitlichen Eckwerte der Integrationsfenster 21, 22 durch die Zeitpunkte $T_1$, $T_2$ und $T_3$ genannt und verdeutlicht. Für das erste Integrationsfenster 21 gilt, dass dieses bei $T_1$ geöffnet und bei $T_2$ geschlossen wird. Das zweite Integrationsfenster 22 wird bei $T_2$ geöffnet und bei $T_3$ geschlossen. Die Figuren 6 und 7 beziehen sich jeweils auf eine einzige von einer Vielzahl von Photodioden, die in einem optoelektronischen Chip jeweils für einen Bildpunkt empfangene Lichtimpulse aufnehmen und weiterleiten. Die Kurzzeitintegration über unmittelbar aufeinanderfolgende gleichlange Zeitfenster ist verbunden mit der empfangsseitigen Triggerverzögerung, die stufenweise insbesondere um gleiche Beträge anwächst. Bei jeder zeitweise konstanten Triggerverzögerung geschieht mindestens eine Belichtung und eine Integration bezogen auf ein Zeitfenster. Bei jeder Stufe mit konstanter Triggerverzögerung sind insbesondere Mehrfachbelichtungen vorgesehen. Die Detektion des Triggerverzögerungswertes der über die Auswertung mittels Lichtlaufzeit in einen Abstandswert umgerechnet werden kann, geschieht durch stufenweises Überstreichen eines empfangenen Lichtimpulses durch die beiden unmittelbar aufeinanderfolgenden Integrationsfenster 21, 22. Die Auswertung erfolgt zweckmäßigerweise nach der Digitalisierung der analogen Spannungssignalwerte. Die Vorteile dieses Verfahrens liegen in der absolut identischen Integration innerhalb der beiden Zeitfenster. Die Beleuchtung kann aus unterschiedlichen Laserimpulsen herrühren, deren Verlauf geringfügig voneinander abweichen kann.

In der Figur 6 eine Auswerteschaltung dargestellt, die vom Aufbau her eine parallele Auswertung ermöglicht. Jedem Integrationsfenster ist ein jeweils baugleicher Integrator zugeordnet. Die sich ergebenden Signale werden jeweils über eine Zwischenspeichereinheit SH auf einen Differenzverstärker gelegt, wodurch ein Differenzbild erzeugbar ist. Nachdem sich die zeitlichen Integrationsbereiche bei der Messung jedoch aneinander reihen, werden zeitlich versetzte Integrationen vorliegen. So wird in der Sektion A der zeitliche Rahmen von $T_1$ bis $T_2$ entsprechend dem ersten Integrationsfenster 21 berücksichtigt und in der Sektion B im entsprechenden Zeitraum von $T_2$ bis $T_3$ der Rahmen des Integrationsfensters 22.

Die Figur 7 zeigt den gleichen Verfahrensgrundsatz, wobei jedoch die Ausgestaltung der Photodiode eine parallele Integration ermöglichen. Die Photodiode ist in zwei getrennte Sektionen eingeteilt, so dass jede Sektion die gleiche optische Intensität empfängt. Besonders gut geeignet hierzu sind Rautenmuster, wie sie in Figur 7 dargestellt sind. Die Trennung der Photodiode in zwei Einzelphotodioden bewirkt, dass die beiden Integrationen vollkommen ohne Wechselwirkungen ablaufen. Die Schaltung entsprechend Figur 7 ermöglicht somit die parallele Auswertung von zwei auf sämtlichen Photodioden jeweils vorhandenen Sektionen, die jeweils einem Integrator zugeführt werden. Die eine zeitliche Integration bezieht sich wiederum auf das erste Integrationsfensters 21 im Zeitrahmen von $T_1$ bis $T_2$ und die zweite Integration bezieht sich auf das zweite Integrationsfenster in der Zeit von $T_2$ bis $T_3$. Die weitere Auswertung geschieht in gleicher Weise wie sie in Figur 6 dargestellt wird.

Mit einem Verfahren entsprechend der Erfindung können Messgenauigkeiten in Bezug auf die Entfernungsmessung relativ zum Stand der Technik dreifach verbessert werden. Die bis dahin notwendige Laserleistung kann um den Faktor 10 verringert werden.

**Patentansprüche**

1. Verfahren zur Aufnahme eines dreidimensionalen Abstandsbildes eines Objektes anhand von Lichtlaufzeitmessungen, für die Lichtimpulse (1) von einer Lichtquelle auf eine Objektoberfläche gesendet und zurückreflektierte Lichtimpulse (3) mittels eines Fotodetektors mit Kurzzeitintegration empfangen werden, sowie der Objektpunktabstand (d) jeweils aus der Lichtlaufzeit ($T_0$) von Lichtimpulsen berechnet wird, wobei

   - ein für den Start eines Lichtimpulses (1) erzeugtes Triggersignal zugleich empfangsseitig mit einer schrittweise in Zeitinkrementen ($\Delta T_V$) ansteigenden Triggerverzögerung ($T_v$) zum Öffnen von mindestens einem Integrationsfenster (2,21,22) zum Empfang zurückreflektierter Lichtimpulse (3) angewandt wird, wodurch eine Korrelationsfunktion aus der zeitlichen Überlagerung von Integrationsfenster und empfangenem Lichtimpuls erzeugbar ist, und
   - bei jeder vorgegebenen Triggerverzögerung ($T_v$) eine Mehrfachbelichtung mit für jede Belichtung geöffnetem Integrationsfenster zur kumulierten Integration der reflektierten Lichtimpulse (3) durchgeführt wird.

2. Verfahren nach Anspruch 1, bei dem

   - das Triggersignal empfangsseitig zum wiederholten Öffnen eines einzigen Integrationsfensters (2) zum Empfang zurückreflektierter Lichtimpulse (3) verwendet wird,
   - ein jeweiliger Abstand (d) eines Objektpunktes bei Erreichen eines Maximalwertes der integrierten Spannung (U) aus der zugehörigen Triggerverzögerung ($T_v$), die annähernd gleich der Lichtlaufzeit ($T_0$) ist, errechnet wird.

3. Verfahren nach einem der vorhergehenden Ansprüche, bei dem die zeitliche Länge eines Integrationsfensters (2) gleich der Dauer eines Lichtimpulses (1,3) ist.

4. Verfahren nach Anspruch 1, bei dem

   - das Triggersignal empfangsseitig zum wiederholten Öffnen eines ersten Integrationsfensters (21) mit einem unmittelbar darauf folgenden zweiten Integrationsfenster (22) zum jeweiligen Empfang zurückreflektierter Lichtimpulse (3) verwendet wird,
   - die Kurzzeitintegration für die beiden Integrationsfenster (21,22) parallel oder seriell mit gleicher Integrationszeit ($T_i$) durchgeführt wird,
   - die Dauer der Lichtimpulse (3) relativ zur Integrationszeit ($T_i$) klein ist und
   - ein jeweiliger Abstand (d) eines Objektpunktes berechenbar ist, wenn ein Lichtimpuls (3) auf der gemeinsamen Grenze zwischen erstem und zweitem Integrationsfenster (21,22) positioniert ist und gleiche Beträge der integrierten zu den beiden Integrationsfenstern (21,22) jeweils zugehörigen Spannungen (U) vorliegen, wobei die korrespondierende der Lichtlaufzeit ($T_0$) entsprechende Triggerverzögerung ($T_v$) in den Abstandswert (d) umgerechnet wird.

5. Verfahren nach Anspruch 4, wobei anstelle des Vergleiches der Beträge der integrierten Spannungen (U) eine Spannung negativ angetragen wird und der Nulldurchgang zwischen beiden, den hintereinandergeschalteten Integrationsfenstern zugeordneten Spannungen detektiert wird.

6. Verfahren nach Anspruch 4 oder 5, bei dem als Sensorelemente eingesetzte Photodioden in sich in zwei getrennte Sektionen unterteilt sind, wobei jede Sektion die gleiche optische Intensität empfängt.

7. Verfahren nach einem der vorhergehenden Ansprüche, wobei bei stark unterschiedlicher Reflektivität eines Objektes oder einzelner Objektpunkte die Anzahl der Mehrfachbelichtungen so gewählt wird, dass für möglichst viele Objektpunkte die integrierten Intensitätswerte nahe dem Sättigungsbereich liegen.

8. Verfahren nach einem der vorhergehenden Ansprüche, wobei zur Beleuchtung das Licht eines Lasers oder einer Laserdiode verwendet wird.

9. Verfahren nach einem der vorhergehenden Ansprüche, wobei für den ersten empfangsseitigen Lichtimpuls (3) einer Bildaufnahme die Triggerverzögerung gleich Null ist.

10. Verfahren nach einem der vorhergehenden Ansprüche, wobei die zeitliche Länge eines Integrationsfensters (2) konstant ist.

11. Verfahren nach einem der vorhergehenden Ansprüche, wobei die Triggerverzögerung inkrementenweise weniger als 0,25 Nanosekunden beträgt.

12. Verfahren nach einem der vorhergehenden Ansprüche, wobei zur Bestimmung von Maximalwerten bzw. von Nulldurchgängen der Spannung (U) Interpolationsverfahren eingesetzt werden.

13. Verfahren nach Anspruch 12, wobei Interpolationsverfahren auf der Basis von quadratischen Polynomen oder Splin-Funktionen eingesetzt werden.

14. Verfahren nach einem der vorhergehenden Ansprüche, wobei zur Auswertung von Spannungswerten ein Vergleich mit einer vorab gespeicherten Referenzkurve mit bekanntem Abstand (d) durchgeführt wird.

15. Verfahren nach einem der vorhergehenden Ansprüche, wobei die Triggerverzögerung ($T_V$) durch Verwendung von programmierbaren Verzögerungsleitungen geschieht.

16. Vorrichtung zur Durchführung eines Verfahrens entsprechend einem der Ansprüche 1-3 oder 7-15 bestehend aus:

- einer Lichtimpulsbeleuchtung mit einer einzigen Lichtquelle zur Beleuchtung einer Objektoberfläche,
- einem CMOS-Sensor mit einer Vielzahl von Sensorpunkten als Fotodetektor mit pixelweiser Kurzzeitintegration,
- einer Kontroll- und Verarbeitungseinheit, die zumindest die sendeseitige und empfangsseitige Triggerung steuert und die Berechnung der Abstandswerte aus den Spannungssignalen (U) durchführt,
- einer Verzögerungsleitung zwischen der Kontroll- und Verarbeitungseinheit und dem CMOS-Empfangssensor zur Bereitstellung einer schrittweise einstellbaren Triggerverzögerung und
- jeweiligen Triggerzuleitungen zu der Lichtimpulsbeleuchtung und zu dem CMOS-Empfangssensor.

17. Vorrichtung zur Durchführung eines Verfahrens entsprechend einem der Ansprüche 1 oder 4-15, bestehend aus:

- einer Lichtimpulsbeleuchtung mit einer einzigen Lichtquelle zur Beleuchtung einer Objektoberfläche,
- einem CMOS-Sensor mit einer Vielzahl von Sensorpunkten als Fotodetektor mit pixelweiser Kurzzeitintegration,
- einer Kontroll- und Verarbeitungseinheit, die zumindest die sendeseitige und empfangsseitige Triggerung steuert und die Berechnung der Abstandswerte aus den Spannungssignalen (U) unter Einsatz eines Differenzverstärkers durchführt,
- einer Verzögerungsleitung zwischen der Kontroll- und Verarbeitungseinheit und dem CMOS-Empfangssensor zur Bereitstellung einer schrittweise einstellbaren Triggerverzögerung und
- jeweiligen Triggerzuleitungen zu der Lichtimpulsbeleuchtung und zu dem CMOS-Empfangssensor.

18. Vorrichtung nach Ansprüche 16-17, bei der die Kontroll- und Verarbeitungseinheit zumindest teilweise in der elektronischen Einheit des CMOS-Empfangssensor integriert ist.

19. Vorrichtung nach einem der Ansprüche 16-18, bei der die Spannungswerte von Photodioden parallel oder seriell Integratoren zugeführt werden, anschließend in Zwischenspeichereinheiten gespeichert optional einem Differenzverstärker und dann einer Verarbeitungseinheit zugeführt werden.

**Claims**

1. Method for recording a three-dimensional distance-measuring image of an object by measuring light propagation times, for which light-induced pulses (1) from a light source are transmitted to an object surface and backscattered light-induced pulses (3) are received by means of a photodetector with short-term integration, and the object point distance (d) is calculated in each case from the light propagation time ($T_0$) of light-induced pulses, whereby

- a trigger signal produced for starting a light-induced pulse (1) is applied at the same time on the receiving side with a trigger delay ($T_V$) that increases gradually in time increments ($\Delta T_V$) for opening at least one integration window (2, 21, 22) for receiving backscattered light-induced pulses (3), whereby a correlation function can be generated from the timing overlap between integration window and received light-induced pulse, and
- in each predetermined trigger delay ($T_V$), a multiple illumination is implemented with an integration window opened for each illumination for cumulative integration of the reflected light-induced pulses (3).

2. Method according to Claim 1, whereby

- the trigger signal on the receiving side is used for the repeated opening of a single integration window (2) for receiving backscattered light-induced pulses (3),
- the distance (d) of an object point is calculated once a maximum value for the integrated voltage (U) is reached, from the corresponding trigger delay ($T_V$), which is almost equal to the light propagation time ($T_0$).

3. Method according to one of the preceding claims, in which the duration of an integration window (2) is equal to the duration of a light-induced pulse (1,3).

4. Method according to Claim 1, whereby

- the trigger signal on the receiving side is used for the repeated opening of a first integration window (21), followed immediately by a second integration window (22), in each case for the purpose of receiving backscattered light-induced pulses (3),
- the short-term integration for the two integration windows (21, 22) is carried out in parallel or in series with equal integration time ($T_i$),
- the duration of the light-induced pulses (3) is small relative to the integration time ($T_i$), and
- the distance (d) of an object point can be calculated if a light-induced pulse (3) is positioned on the shared boundary between the first and second integration windows (21, 22) and equal amounts of the integrated voltages (U) relating to the two integration windows (21, 22) are present, whereby the corresponding trigger delay ($T_V$) that corresponds to the light propagation time ($T_0$) is converted into the distance value (d).

5. Method according to Claim 4, whereby, instead of comparing the amounts of the integrated voltages (U), one voltage is negatively set and the zero crossover between the two voltages assigned to the successively actuated integration windows is detected.

6. Method according to Claim 4 or 5, whereby photodiodes used as sensor elements are divided into two separate sections, with each section receiving the same optical intensity.

7. Method according to one of the preceding claims, whereby, if the reflectivity of an object or individual object points is heavily differentiated, the number of multiple illuminations is selected such that the integrated intensity values are near the saturation region for as many object points as possible.

8. Method according to one of the preceding claims, whereby the light from a laser or laser diode is used for illumination.

9. Method according to one of the preceding claims, whereby the trigger delay for the first light-induced pulse (3) of an image recording on the receiving side is equal to zero.

10. Method according to one of the preceding claims, whereby the duration of an integration window (2) is constant.

11. Method according to one of the preceding claims, whereby the trigger delay increment is less than 0.25 nanoseconds.

12. Method according to one of the preceding claims, whereby interpolation methods are used to determine maximum values and/or zero crossovers of the voltage (U).

13. Method according to Claim 12 whereby interpolation methods are used on the basis of quadratic polynomials or spline functions.

14. Method according to one of the preceding claims, whereby a comparison with a previously stored reference curve with known distance (d) is carried out in order to evaluate voltages.

15. Method according to one of the preceding claims, whereby the trigger delay ($T_V$) occurs through the use of programmable delay lines.

16. Device for implementing a method according to one of Claims 1-3 or 7-15, comprising:

- a light-induced pulse illumination with a single light source for illuminating an object surface,
- a CMOS sensor with a multitude of sensor points as the photodetector, with pixel-based short-term integration,
- a control and processing unit, that controls at least the triggering on the transmission side and the receiving side and calculates the distance values from the voltage signals (U),
- a delay line between the control and processing unit and the CMOS receiving sensor for preparing an incrementally adjustable trigger delay, and
- appropriate trigger cables to the light-induced pulse illumination and to the CMOS receiving sensor.

17. Device for implementing a method according to one of Claims 1 or 4-15, comprising:

- a light-induced pulse illumination with a single light source for illuminating an object surface,
- a CMOS sensor with a multitude of sensor points as the photodetector, with pixel-based short-term integration,

- a control and processing unit, that controls at least the triggering on the transmission side and the receiving side and calculates the distance values from the voltage signals (U) using a difference amplifier,

- a delay line between the control and processing unit and the CMOS receiving sensor for preparing an incrementally adjustable trigger delay, and

- appropriate trigger cables to the light-induced pulse illumination and to the CMOS receiving sensor.

18. Device according to Claims 16-17, whereby the control and processing unit is integrated at least partially in the electronic unit of the CMOS receiving sensor.

19. Device according to one of Claims 16-18, whereby the voltage values of photodiodes are fed in parallel or in series, then stored in the interim buffer units where they are optionally fed to a difference amplifier and then to a processing unit.

## Revendications

1. Procédé pour prendre une image de distance tridimensionnelle d'un objet au moyen de mesures du temps de parcours de la lumière pour lesquelles des impulsions lumineuses (1) sont envoyées d'une source lumineuse à une surface d'un objet et les impulsions lumineuses réfléchies (3) sont reçues au moyen d'un photo-détecteur à intégration instantanée, et la distance du point objet (d) est calculée à chaque fois à partir du temps de parcours de la lumière $(T_0)$ d'impulsions lumineuses, dans lequel

    - un signal de déclencheur produit pour le démarrage d'une impulsion lumineuse (1) est utilisé en même temps sur le côté réception, avec une temporisation de déclencheur $(T_V)$ qui croît par pas successifs à des incréments de temps $(\Delta T_V)$, pour ouvrir au moins une fenêtre d'intégration (2, 21, 22) pour la réception d'impulsions lumineuses réfléchies (3), de sorte qu'une fonction de corrélation peut être produite sur la base de la superposition dans le temps de la fenêtre d'intégration et de l'impulsion lumineuse reçue, et

    - dans lequel, à chaque temporisation de déclencheur prédéterminée $(T_V)$, est exécutée une illumination multiple avec une fenêtre d'intégration ouverte pour chaque illumination, afin de réaliser une intégration cumulée des impulsions lumineuses réfléchies (3).

2. Procédé selon la revendication 1, dans lequel

    - le signal de déclencheur est utilisé côté réception pour l'ouverture répétée d'une fenêtre d'intégration unique (2) pour la réception d'impulsions lumineuses réfléchies (3),

    - une distance (d) d'un point objet est calculée lorsqu'on atteint une valeur maximale de la tension intégrée (U) sur la base de la temporisation de déclencheur correspondante $(T_V)$ qui est à peu près égale au temps de parcours de la lumière $(T_0)$.

3. Procédé selon une des revendications précédentes, dans lequel la longueur de temps d'une fenêtre d'intégration (2) est égale à la durée d'une impulsion lumineuse (1, 3).

4. Procédé selon la revendication 1, dans lequel

    - le signal de déclencheur est utilisé côté réception pour ouvrir répétitivement une première fenêtre d'intégration (21) immédiatement suivie d'une seconde fenêtre d'intégration (22), à chaque fois pour la réception d'impulsions lumineuses réfléchies (3),

    - l'intégration instantanée pour les deux fenêtres d'intégration (21, 22) est exécutée en parallèle ou en série avec le même temps d'intégration $(T_i)$,

    - la durée des impulsions lumineuses (3) est petite relativement au temps d'intégration $(T_i)$ et

    - une distance (d) d'un point objet peut être calculée lorsqu'une impulsion lumineuse (3) est positionnée sur la limite commune entre la première et la seconde fenêtre d'intégration (21, 22) et que les valeurs des tensions (U) intégrées qui appartiennent respectivement aux deux fenêtres d'intégration (21, 22) sont égales, la temporisation de déclencheur $(T_V)$ correspondante, qui correspond au temps de parcours de la lumière $(T_0)$ étant convertie en la valeur de distance (d).

5. Procédé selon la revendication 4, dans lequel au lieu de comparer les valeurs absolues des tensions intégrées (U), une tension est appliquée avec le signe moins et on détecte le passage par zéro entre les deux tensions correspondant aux fenêtres d'intégration activées l'une après l'autre.

6. Procédé selon la revendications 4 ou 5, dans lequel des photo-diodes utilisées comme éléments détecteurs sont subdivisées chacune en deux sections séparées, chaque section recevant la même intensité optique.

7. Procédé selon une des revendications précédentes, dans lequel, en présence de fortes différences de réflectivité d'un objet ou de différents points d'un objet, le nombre des illuminations multiples est choisi de manière que, pour un nombre de points objets aussi grand que possible, les valeurs d'intensité intégrées soient proches de la région de saturation.

**8.** Procédé selon une des revendications précédentes, dans lequel on utilise pour l'illumination la lumière d'un laser ou d'une diode laser.

**9.** Procédé selon une des revendications précédentes, dans lequel, pour la première impulsion lumineuse côté réception (3) d'une prise de vue, la temporisation de déclencheur est égale à zéro.

**10.** Procédé selon une des revendications précédentes, dans lequel la longueur de temps d'une fenêtre d'intégration (2) est constante.

**11.** Procédé selon une des revendications précédentes, dans lequel la temporisation de déclencheur est de moins de 0,25 nanoseconde par incrément.

**12.** Procédé selon une des revendications précédentes, dans lequel pour la détermination de valeurs maximales ou de passage par zéro de la tension (U), on utilise des procédés d'interpolation.

**13.** Procédé selon la revendication 12, dans lequel on utilise des procédés d'interpolation à base de polynômes quadratiques ou de fonctions spline.

**14.** Procédé selon une des revendications précédentes, dans lequel, pour l'analyse des valeurs de tension, on effectue une comparaison avec une courbe de référence correspondant à une distance connue (d) qui a été préalablement mémorisée.

**15.** Procédé selon une des revendications précédentes, dans lequel la temporisation de déclencheur ($T_V$) s'effectue en utilisant des lignes à retard programmables.

**16.** Dispositif pour la mise en oeuvre d'un procédé selon une des revendications 1-3 ou 7-15, composé de :

> - un illuminateur à impulsions lumineuses comprenant une unique source lumineuse pour l'illumination d'une surface d'objet,
> - un détecteur CMOS comprenant une pluralité de points de détecteur, utilisé comme photo-détecteur avec intégration instantanée par pixels,
> - une unité de contrôle et de traitement qui commande au moins le déclenchement côté émission et côté réception et exécute le calcul des valeurs de distance à partir des signaux de tension (U),
> - une ligne à retard entre l'unité de contrôle et de traitement et le capteur de réception CMOS, destinée à la génération d'une temporisation de déclencheur réglable par pas successifs et
- des lignes de déclencheur aboutissant respectivement à l'illuminateur à impulsions lumineuses et au capteur de réception CMOS.

**17.** Dispositif pour la mise en oeuvre d'un procédé selon une des revendications 1 ou 4-15, composé de :

> - un illuminateur à impulsions lumineuses comprenant une unique source lumineuse pour illuminer une surface d'objet,
> - un capteur CMOS comprenant une pluralité de points capteurs, utilisé comme photo-capteur comportant une intégration instantanée par pixels,
> - une unité de contrôle et de traitement qui commande au moins le déclenchement côté émission et côté réception et exécute le calcul des valeurs de distance à partir des signaux de tension (U), avec utilisation d'un amplificateur différentiel,
> - une ligne à retard entre l'unité de contrôle et de traitement et le capteur de réception CMOS, destinée à générer une temporisation de déclencheur réglable par pas successifs et
> - des lignes de déclencheur aboutissant respectivement à l'illuminateur à impulsions lumineuses et au capteur de réception CMOS.

**18.** Dispositif selon les revendications 16-17, dans lequel l'unité de contrôle et de traitement est intégrée au moins partiellement dans l'unité électronique du capteur de réception CMOS.

**19.** Dispositif selon une des revendications 16-18, dans lequel les valeurs de tension des photo-diodes sont transmises en parallèle ou en série à des intégrateurs, et ensuite facultativement à un amplificateur différentiel à l'état mémorisé dans les unités de mémoires intermédiaires, puis amenées à une unité de traitement.

# FIG 1

3D-Szene

Lichtimpuls-beleuchtung

Trigger

Verzögerungs-leitung

Vorgabe der Verzögerung $\Delta T_V$

3D-Bild

CMOS-Sensor

Trigger

$\Delta T_V$

Kontroll- und Verarbeitungseinheit ($\mu P$)

Bildsignal

CMOS Sensor:
n x m photoempfindliche Bildelemente mit pixelweise einstellbarem Kurzzeitshutter

x

y

z

EP 1 423 731 B1

## FIG 2

EP 1 423 731 B1

1. Messung mit $T_V = 0$

2. Messung mit $0 < T_V < T_0$

i. Messung mit $0 < T_V = T_0$

i+n. Messung mit $T_V > T_0$

Betrachtet wird ein Objektpunkt d=const. $T_0$=const.

Lichtimpuls 1 sendeseitig

empfangsseitig

Integrations-fenster 2 mit Triggerver-zögerung $T_V = n(0,...,i) \times \Delta T_V$

Lichtimpuls 3 empfangsseitig bei Abstand d, Laufzeit $\Delta T = 2d/c$

integrierte Spannung U

$T_V$    $T_V$    $T_V$    $T_V = n \times \Delta T_V$

$T_0$    $T_0$    $T_0$    $T_0$

$U_1$    $U_2$    $U_{i(max)}$    $U_{i+n}$

$T_V = T_0$

**FIG 3**

Spannung U des Integrators

U max

Interpolationskurve

$T_{vi(i=o-n)}$   $T_V = 0$   $1\Delta T_V$   $3\Delta T_V$   $T_0$   $6\Delta T_V$   $8\Delta T_V$   Laufzeitmessung mit zunehmender Triggerverzögerung $T_V$

Triggerverzögerung $T_V = n \cdot \Delta T_V,\ n = 1,2,3....$

Lichtlaufzeit   $T_0 = 2d/c = 4\Delta T_V + \Delta T_V/2$

EP 1 423 731 B1

# FIG 4

# FIG 5

$$Tv_n = n \times \Delta T_v$$

$T_v(n) =$ Triggerverzögerung mit $n = 0,1,2,\ldots i$

$\Delta T_v =$ Inkrement der Verzögerungsleitung

$C =$ Lichtgeschwindigkeit

$d =$ Pixelabstand (Objekt-Sensor)

$n =$ Anzahl der Verzögerungsschritte

$n_0 =$ Nummer des Verzögerungsschrittes vor dem Nulldurchgang

$\Delta U =$ Differenz zum Zeitpunkt $T_2$ und $T_3$

$$d = n_0 \cdot \Delta Tv \cdot C \left(1 + \frac{\Delta U_1}{\Delta U_1 + \Delta U_2}\right)$$

EP 1 423 731 B1

# FIG 6

Photodiode
n-1

Photodiode
n

Photodiode
n+1

INTEGRATOR

$T_2$

$\int$

$T_1$

Sektion A

Sektion B

$T_3$

$\int$

$T_2$

INTEGRATOR

Sample
SH
Hold

Sample
SH
Hold

Bild mit Integrationszeit $T_i$
zur Zeit $t=T_2$

Bild mit Integrationszeit $T_i$
zum Zeitpunkt $t=T_3$

Differenzbild
zwischen Zeitpunkt
$t=T_2$ und $t=T_3$

EP 1 423 731 B1

# FIG 7

Photodiode
n-1

Photodiode
n

Photodiode
n+1

INTEGRATOR

$T_2$

$\int$

$T_1$

Sektion A

Sektion B

$T_3$

$\int$

$T_2$

INTEGRATOR

Sample
SH
Hold

Sample
SH
Hold

Bild mit Integrationszeit
zur Zeit $t=T_2$

Bild mit Integrationszeit
zum Zeitpunkt $t=T_3$

$+$

$-$

Differenzbild
zwischen Zeitpunkt
$t=T_2$ und $t=T_3$

EP 1 423 731 B1